Europäisches Patentamt

(19) European Patent Office

Office européen des brevets

(11) Veröffentlichungsnummer: **0 253 159**
**B1**

(12) ## EUROPÄISCHE PATENTSCHRIFT

(45) Veröffentlichungstag der Patentschrift:
15.11.89

(51) Int. Cl.⁴: **B62D 25/14, B62D 65/00**

(21) Anmeldenummer: **87108998.3**

(22) Anmeldetag: **23.06.87**

(54) Vormontierte Baueinheit für den Cockpit-Bereich von Kraftfahrzeugen, insbesondere Personenkraftwagen, und Verfahren zum Einbau einer solchen Baueinheit.

(30) Priorität: **02.07.86 DE 3622165**

(43) Veröffentlichungstag der Anmeldung:
**20.01.88 Patentblatt 88/3**

(45) Bekanntmachung des Hinweises auf die Patenterteilung:
**15.11.89 Patentblatt 89/46**

(84) Benannte Vertragsstaaten:
**DE ES FR GB IT SE**

(56) Entgegenhaltungen:
**EP-A- 0 081 656**
**EP-A- 0 124 093**

(73) Patentinhaber: **Adam Opel Aktiengesellschaft, Bahnhofsplatz 1 Postfach 17 10, D-6090 Rüsselsheim(DE)**

(84) Benannte Vertragsstaaten: **DE ES FR GB IT SE**

(73) Patentinhaber: **General Motors Espana, S.A., Poligono Entrerrios, Figueruelas (Zaragoza)(ES)**

(84) Benannte Vertragsstaaten: **ES**

(72) Erfinder: **Köchy, Fritz, Ing.(grad.), Schlesische Strasse 24, D-6500 Mainz(DE)**
Erfinder: **Helmsing, Gerhard, Ing.(grad.), Am Honigbaum 6, D-6239 Eppstein(DE)**

(74) Vertreter: **Rosenfeld, Jürgen, Dipl. Ing. et al, Adam Opel Ag Patentabteilung Bahnhofsplatz 1 Postfach 17 10, D-6090 Rüsselsheim(DE)**

ACTORUM AG

## Beschreibung

Die Erfindung bezieht sich auf eine vormontierte Baueinheit für den Cockpit-Bereich von Kraftfahrzeugen, insbesondere Personenkraftwagen, bei der als Montagebasis für diverse fahrgast- und/oder motorraumseitig liegende Aggregate, so u.a. für die Armaturentafel, Stirnwand und Stirnwandquerträger dienen, die zu diesem Zweck von der Rohkarosserie getrennt sind, und wobei die Baueinheit in Einbaulage mit den seitlich angrenzenden Karosseriewänden verbindbar ist.

Die Erfindung geht also aus von einem bekannten Stand der Technik gemäß DE-A-33 15 646. Der Einbau der dort offenbarten vormontierten Baueinheit für den Cockpit-Bereich erfolgt vertikal von oben nach unten durch die Frontscheibenöffnung der Karosserie. Der von unten nach oben konvergierend geneigte Verlauf der A-Säulen der Fahrzeugkarosserie macht es allerdings erforderlich, die Armaturentafel beidseitig zu kürzen. Nach Erreichen der Einbaustellung der vormontierten Baueinheit wird die beidseitig fehlende Seitenlänge der Armaturentafel durch die Innenverkleidung der jeweils zugeordneten A-Säule und der Seitentüren ergänzt.

Aufgabe der Erfindung ist es, eine vormontierte Baueinheit der eingangs bezeichneten Art so auszugestalten bzw. einzubauen, daß eine Ergänzung der Armaturentafel durch Bestandteile der A-Säulen und der Seitentüren entbehrlich wird.

In konstruktiver Hinsicht wird die Aufgabe erfindungsgemäß dadurch gelöst, daß die Armaturentafel an ihrer dem Fahrgastraum zugewandten Hinterkante bzw. Stirnfläche ihre dem Endmontagezustand entsprechende volle Breite und im vorderen Bereich beidseitig je einen Hinterschnitt besitzt, der in Einbaulage der Baueinheit jeweils durch einen Deckel verschließbar ist.

Hierbei dienen bzw. genügen die Hinterschnitte der Armaturentafel voll und ganz dem Erfordernis, die Schräglage der A-Säulen der Karosserie zu berücksichtigen. Zur anschließenden Verblendung der Hinterschnitte in Einbaustellung der Baueinheit sind keine Teile der A-Säulen oder der Seitentüren mehr erforderlich. Diese Funktion erfüllen nurmehr einfache Deckel, die zweckmäßigerweise als vorgeformte Kunststoffteile ausgebildet sind und zugleich als Blenden zur Verkleidung seitlich angeordneter Lautsprecher dienen.

In verfahrensmäßiger Hinsicht besteht die Erfindung nach einer von zwei Alternativlösungen darin, daß die vormontierte Baueinheit zunächst seitlich durch die Öffnung einer der Seitentüren in die Karosserie eingefahren, anschließend horizontal von hinten nach vorn verschoben und schließlich vertikal in ihre Einbaulage abgesenkt wird, in der sie mit den angrenzenden Karosseriewänden verbunden werden kann.

Nach einer anderen Ausführungsform des verfahrensmäßigen Teils der Erfindung wird die vormontierte Baueinheit in um eine Vertikalachse um 90° zu ihrer Einbaustellung verdrehter Lage horizontal von vorn durch die Frontscheibenöffnung in die Karosserie eingefahren, anschließend um 90° im Uhrzeigersinn in ihre Einbaustellung gedreht und schließlich vertikal in ihre Endmontageposition abgesenkt, in der sie mit den angrenzenden Karosseriewänden verbunden werden kann.

In beiden Fällen ist es wesentlich, daß die vormontierte Baueinheit in einer derartigen Höhe in die Karosserie eingefahren wird, daß die abschließende Absenkbewegung in die Endmontageposition nur um eine Strecke von max. etwa 80 mm erfolgt.

Durch die genannten erfindungsgemäßen Maßnahmen wird vorteilhafterweise eine Teilung oder Kürzung der Armaturentafel vermieden. Vielmehr kann diese an ihrer Hinterkante bzw. dem Fahrgastraum zugewandten Stirnfläche bis an die Türverkleidung heran die volle Breite behalten. Es ist nur noch jeweils ein kleiner seitlicher Ausschnitt erforderlich, der sich durch den senkrechten Hub von ca. max. 80 mm ergibt. Die seitlichen Ausschnitte (Hinterschnitte) lassen sich in der Endmontagestellung der vormontierten Baueinheit leicht durch je einen Deckel verschließen. Luftdüsen, Lichtschalter und Instrumente können somit in der vollen Breite der Armaturentafel vormontiert werden. Ein nachträglicher Einbau einzelner Aggregate oder Instrumente an der Armaturentafel wird also entbehrlich. Die Armaturentafel braucht nicht mehr geteilt bzw. durch seitliche Ansätze ergänzt zu werden.

In der Zeichnung sind Ausführungsbeispiele der Erfindung veranschaulicht, die nachstehend beschrieben werden. Es zeigt:

Fig. 1 eine Armaturentafel für Kraftfahrzeuge (hälftig), in Draufsicht,

Fig. 2 eine Armaturentafel, ähnlich derjenigen nach Fig. 1, jedoch in perspektivischer Darstellung, und

Fig. 3 und 4 jeweils die vordere Hälfte einer Pkw-Karosserie, in perspektivischer Darstellung.

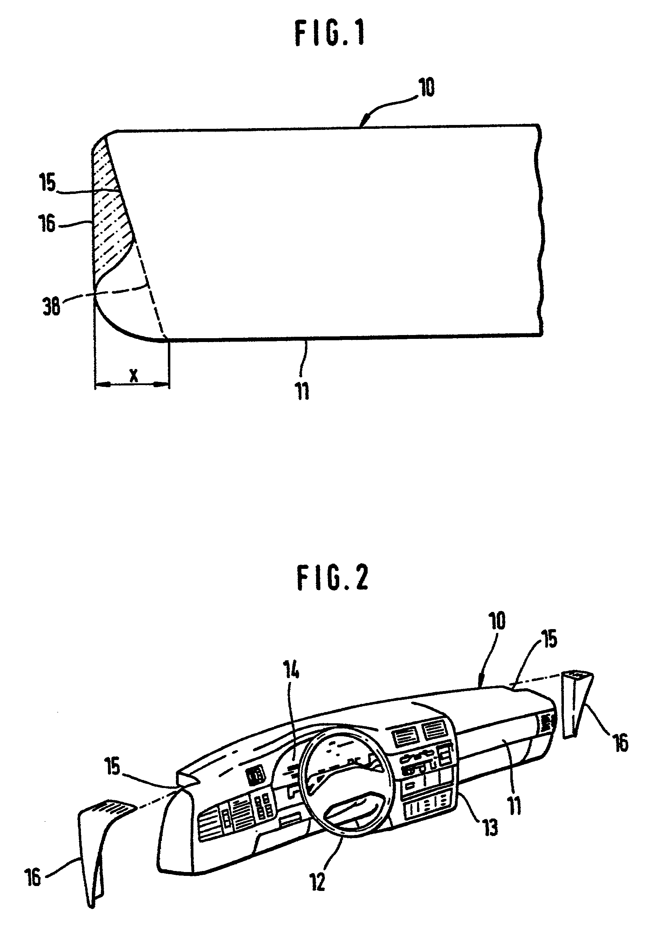

Die in Fig. 1 und 2 offenbarten Armaturentafeln, die für ein Kraftfahrzeug, insbesondere für einen Pkw vorgesehen sind, sind jeweils mit 10 bezeichnet. Sie bestehen aus einem für die dargestellte Formgebung geeigneten Werkstoff, z.B. einem mehrschichtig aufgebauten Kunststoffmaterial. An der dem Fahrer zugewandten Stirnfläche 11 der Armaturentafel 10 (nach Fig. 2) sind einige Instrumente und Aggregate erkennbar, von denen - beispielsweise - die Lenkung mit 12, das Heizungs-Lüftungssystem mit 13 und das Anzeigenfeld mit 14 beziffert ist.

An den Enden der Armaturentafel 10 ist beidseitig je ein Hinterschnitt 15 eingearbeitet, der die aus Fig. 1 ersichtliche Form aufweist. In Einbaulage der Armaturentafel 10 werden diese Hinterschnitte 15 durch Deckel 16 (s. insbesondere Fig. 2) verschlossen, die z.B. als Kunststoff-Spritzteile ausgebildet sind und gleichzeitig als Blenden zur Verkleidung der Lautsprecher eines ggf. eingebauten Autoradios fungieren können.

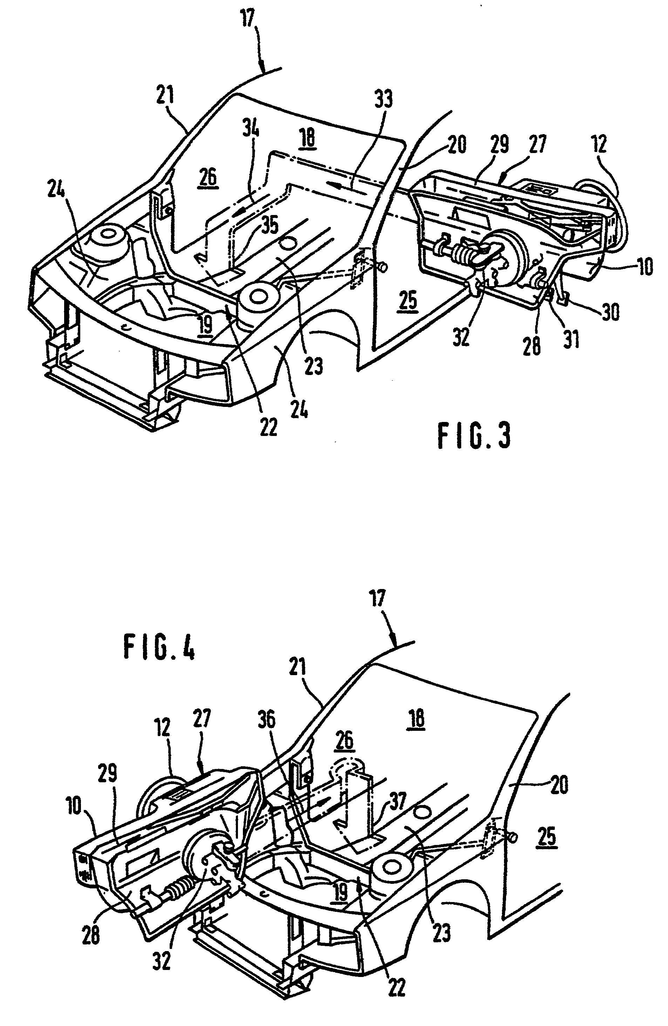

Nach Fig. 3 und 4 bezeichnet 17 eine vormontierte Rohkarosserie eines Personenkraftwagens. Eine für die Frontscheibe (Windschutzscheibe) vorgesehene Öffnung der Karosserie 17 ist mit 18 beziffert. Der nach oben hin offene Motorraum (die Motorhaube ist also noch nicht montiert) trägt das

Bezugszeichen 19. Die den seitlichen Abschluß der Frontscheibenöffnung 18 bildenden sog. A-Säulen der Karosserie 17 sind mit 20 und 21 bezeichnet. Innerhalb der Karosserie 17 ist u.a. ferner erkennbar der Unterbau 22 mit Getriebetunnel 23, einschließlich den sog. Radeinbau bildenden Seitenwänden 24. Für die (noch nicht montierten) Seitentüren vorgesehene Karosserieöffnungen sind mit 25, 26 bezeichnet.

In Fig. 3 ist linksseitig der Karosserie 17 - oberhalb der späteren Einbaulage - eine insgesamt mit 27 bezifferte vormontierte Baueinheit dargestellt. Es handelt sich hierbei um den Cockpit-Bereich des Fahrzeugs. Vormontierte Baueinheiten der hier in Rede stehenden Art werden daher üblicherweise auch als "Cockpit-Modul" bezeichnet. Die vormontierte Baueinheit 27 wird in ihrer aus Fig. 3 ersichtlichen Position durch eine Trag- und Einfahrvorrichtung gehalten, auf deren zeichnerische Darstellung jedoch der besseren Übersichtlichkeit halber verzichtet wurde.

Ein wesentlicher Bestandteil der Baueinheit 27, weil als Vormontagebasis für diese dienend, ist eine Karosserie-Stirnwand 28 mit sich nach oben anschließendem Stirnwand-Querträger 29. Stirnwand 28 und Stirnwand-Querträger 29, die normalerweise der Karosserie 17 zugeordnet wären, sind also zunächst von der Karosserie 17 losgelöst und der auf einem separaten Montageband (nicht gezeigt) vormontierten Baueinheit 27 zugeordnet, wobei sie gleichzeitig gewissermaßen deren Tragrahmen bilden.

Fig. 3 (ebenso wie Fig. 4) läßt weitere wesentliche Bestandteile des die Baueinheit 27 bildenden vormontierten Cockpit-Bereichs erkennen: Die bereits weiter oben erwähnte und beschriebene Armaturentafel 10, die Lenkung 12, ein mit 30 bezeichnetes Kupplungspedal, ein Bremspedal 31, ein Lenkgetriebe 32 und anderes mehr. Auf eine vollständigere Aufzählung der in der vormontierten Baueinheit 27 vereinigten Aggregate, Komponenten und Betätigungselemente kann verzichtet werden, weil es bei der vorliegenden Erfindung im wesentlichen nur auf die Armaturentafel 10 und die Maßnahmen beim Einfahren der vormontierten Baueinheit 27 ankommt. Es soll hier der Hinweis genügen, daß die vormontierte Baueinheit 27 nicht nur fahrgastraumseitige Aggregate des Cockpit-Bereichs, sondern auch solche Aggregate zu umfassen vermag, welche jenseits der Stirnwand 28, also motorraumseitig, liegen.

Der Einbau der in Fig. 3 noch seitlich und leicht oberhalb ihrer eigentlichen Endmontagestellung gezeigten vormontierten Baueinheit 27 erfolgt nun zunächst in Pfeilrichtung 33, also horizontal von links nach rechts (mit Bezug auf die Fahrtrichtung), wobei die vormontierte Baueinheit 27 durch die linke Seitentüröffnung 25 in das Innere der Karosserie 17 gelangt. Anschließend wird die Baueinheit 27 nach einer Absenkung in Fahrtrichtung 34 verschoben und schließlich um max. 80 mm (Pfeil 35) in ihre endgültige Einbaulage abgesenkt.

Bei der Ausführungsform nach Fig. 4 dagegen befindet sich die vormontierte Baueinheit 27 zunächst in einer Lage frontal vor der Karosserie 17, und zwar - bezogen auf eine Vertikalachse - um 90°

gedreht zu ihrer späteren Montageposition. Der Einbau erfolgt zunächst in Pfeilrichtung 36, also horizontal von vorn nach hinten. Hierbei gelangt die Baueinheit 27 durch die Frontscheibenöffnung 18 in das Innere der Karosserie 17. Anschließend findet eine Drehung (wiederum um eine Vertikalachse) um 90° im Uhrzeigersinn statt, bei der die Baueinheit 27 eine ihrer späteren Einbaulage entsprechende Position erreicht. Sie befindet sich in diesem Einbaustadium jedoch noch um max. ca. 80 mm oberhalb der Endmontagestellung. Diese wird also schließlich durch vertikales Absenken (Pfeil 37) der Baueinheit 27 um das vorerwähnte Maß erreicht.

Wie die Konturen der Stirnwand 28 und der inneren Karosseriewände in Fig. 3 und 4 erkennen lassen, schließt sich die Baueinheit 27 in ihrer Einbaulage an die angrenzenden Karosseriewände des Fahrzeugunterbaues 22 an und wird anschließend mit diesem fest verbunden.

Die Form der aus Fig. 1 und 2 ersichtlichen und weiter oben beschriebenen Armaturentafel-Hinterschnitte 15 ergibt sich aus den im Zusammenhang mit Fig. 3 und 4 erläuterten erfindungsgemäßen Einfahrkurven der vormontierten Baueinheit 27. Der Unterschied gegenüber dem bekannten, von oben durch die Frontscheibenöffnung 18 erfolgenden, also rein vertikalen Einbau der vormontierten Baueinheit 27 wird durch Fig. 1 verdeutlicht: Eine mit 38 bezeichnete gestrichelte Linie gibt den Verlauf einer seitlichen Kürzung der Armaturentafel 10 an (vgl. das Maß "x"), die bei rein vertikalem Einfahren der vormontierten Baueinheit 27 erforderlich würde. Demgegenüber ermöglicht die Erfindung im Bereich der dem Fahrgastraum zugewandten Hinterkante bzw. Stirnfläche 11 eine ungekürzte volle Breite der Armaturentafel 10.

**Patentansprüche**

1. Vormontierte Baueinheit (27) für den Cockpit-Bereich von Kraftfahrzeugen, insbesondere Personenkraftwagen, bei der als Montagebasis für diverse fahrgast- und/oder motorraumseitig liegende Aggregate, so unter anderem für die Armaturentafel (10), Stirnwand (28) und Stirnwandquerträger (29) dienen, die zu diesem Zweck von der Rohkarosserie (17) getrennt sind, und wobei die Baueinheit (27) in Einbaulage mit den seitlich angrenzenden Karosseriewänden (22) verbindbar ist, dadurch gekennzeichnet, daß die Armaturentafel (10) an ihrer dem Fahrgastraum zugewandten Hinterkante bzw. Stirnfläche (11) ihre dem Endmontagezustand entsprechende volle Breite und im vorderen Bereich beidseitig je einen Hinterschnitt (15) besitzt, der in Einbaulage der Baueinheit (27) jeweils durch einen Deckel (16) verschließbar ist.

2. Vormontierte Baueinheit nach Anspruch 1, dadurch gekennzeichnet, daß die Deckel (16) als vorgeformte Kunststoffteile ausgebildet sind und zugleich als Blenden zur Verkleidung seitlich angeordneter Lautsprecher dienen.

3. Verfahren zum Einbau einer vormontierten Baueinheit nach Anspruch 1 oder 2, dadurch gekennzeichnet, daß die vormontierte Baueinheit (27) zunächst seitlich durch die Öffnung (25) einer der Seitentüren in die Karosserie (17) eingefahren (Pfeilrichtung 33), anschließend horizontal von hinten nach vorn verschoben (Pfeilrichtung 34) und schließlich vertikal in ihre Einbaulage abgesenkt wird (Pfeilrichtung 35), in der sie mit den angrenzenden Karosseriewänden (22) verbunden werden kann (Fig. 3).

4. Verfahren zum Einbau einer vormontierten Baueinheit nach Anspruch 1 oder 2, dadurch gekennzeichnet, daß die vormontierte Baueinheit (27) in um eine Vertikalachse um 90° zu ihrer Einbaustellung verdrehter Lage horizontal von vorn durch die Frontscheibenöffnung (18) in die Karosserie (17) eingefahren (Pfeilrichtung 36), anschließend um 90° im Uhrzeigersinn in ihre Einbaustellung gedreht und schließlich vertikal in ihre Endmontageposition abgesenkt wird (Pfeilrichtung 37), in der sie mit den angrenzenden Karosseriewänden (22) verbunden werden kann (Fig. 4).

5. Verfahren nach Anspruch 3 oder 4, dadurch gekennzeichnet, daß die vormontierte Baueinheit (27) in einer derartigen Höhe in die Karosserie (17) eingefahren wird, daß die abschließende Absenkbewegung in die Endmontageposition (Pfeilrichtungen 35 bzw. 37) nur um eine Strecke von maximal etwa 80 mm erfolgt.

## Claims

1. Preassembled structural unit (27) for the cockpit area of motor vehicles, in particular passenger cars, in which as an assembly base for various units on the side of the passenger compartment and/or engine compartment and so inter alia for the instrument panel (10), there are used dashboard (28) and dashboard cross member (29) which for this purpose are separate from the shell (17), and wherein the structural unit (27) in the fitted position can be connected to the laterally adjoining body panels (22), characterised in that the instrument panel (10) at its rear edge or face (11) facing towards the passenger compartment has its full width corresponding to the final assembly state and in the front region at each end has an undercut portion (15) which can in each case be closed by a cover (16) in the fitted position of the structural unit (27).

2. Preassembled structural unit according to claim 1, characterised in that the covers (16) are constructed as premoulded plastic components and simultaneously serve as screens for covering laterally mounted loudspeakers.

3. Method for fitting a preassembled structural unit according to claim 1 or 2, characterised in that the preassembled structural unit (27) is first inserted in the body (17) laterally through the opening (25) of one of the side doors (direction of arrow 33), then displaced horizontally forwards (direction of arrow 34) and finally lowered vertically into its fitted position (direction of arrow 35) in which it can be connected to the adjoining body panels (22) (Fig. 3).

4. Method for fitting a preassembled structural unit according to claim 1 or 2, characterised in that the preassembled structural unit (27) in a position turned about a vertical axis through 90° to its fitted position is inserted in the body (17) horizontally from the front through the windscreen opening (18) (direction of arrow 36), then turned through 90° clockwise into its fitted position and finally lowered vertically into its final assembly position (direction of arrow 37) in which it can be connected to the adjoining body panels (Fig. 4).

5. Method according to claim 3 or 4, characterised in that the preassembled structural unit (27) is inserted in the body (17) at such a height that the final lowering movement into the final assembly position (directions of arrows 35 and 37) takes place only over a distance of not more than about 80 mm.

## Revendications

1. Unité de montage préassemblée (27) pour la zone d'habitacle de véhicules automobiles, notamment de véhicules de tourisme, dans laquelle la paroi de tablier (28) et la traverse de tablier (29) servent de base de montage pour divers groupes, entre autres le tableau de bord (10), situés du côté passagers et/ou du côté moteur, et sont à cette fin séparées de la caisse brute (17), l'unité de montage (27) pouvant, en position montée, être liée aux parois de carrosserie adjacentes (22), caractérisée par le fait que le tableau de bord (10) possède, à son arête arrière ou sa surface frontale (11) tournée vers le volume d'habitacle, sa largeur complète correspondant a l'état de montage final et possède, dans sa région avant, de chaque côté, une partie en retrait (15) qui, lorsque l'unité de montage (27) est en position montée, peut être fermée par un couvercle (16).

2. Unité de montage préassemblée selon revendication 1, caractérisée par le fait que les couvercles (16) sont réalisés en tant que pièces de matière plastique préformées et servent en même temps de caches pour haut-parleurs agencés latéralement.

3. Procédé de montage d'une unité de montage préassemblée selon revendication 1 ou 2, caractérisé par le fait que l'unité de montage préassemblée (27) est d'abord introduite latéralement dans la carrosserie (17) (direction de la flèche 33), par l'ouverture (25) de l'une des portières latérales, puis est déplacée horizontalement, de l'arrière vers l'avant (direction de la flèche 34), et finalement abaissée verticalement (direction de la flèche (35), à sa position de montage dans laquelle elle peut être reliée aux parois de carrosserie adjacentes (22) (figure 3).

4. Procédé de montage d'une unité de montage préassemblée selon revendication 1 ou 2, caractérisé par le fait que l'unité de montage préassemblée (27) est introduite dans la carrosserie (17) horizontalement par l'avant, par l'ouverture de pare-brise (18) (direction de la flèche 36), en étant horizontale, dans une position angulairement décalée de 90°, autour d'un axe vertical par rapport a sa position de montage, puis est tournée à sa position de montage par rotation de 90° dans le sens horaire, et est finalement abaissée verticalement (direction de la flèche 37) à sa position de montage final dans laquelle elle peut être liée aux parois de carrosserie adjacentes (22) (figure 4).

5. Procédé selon revendication 3 ou 4, caractérisé par le fait que l'unité de montage préassemblée (27) est introduite dans la carrosserie (17) à une hauteur telle que le mouvement final de descente à la position de montage final (direction de la flèche 35 ou 37) ne s'effectue que sur un trajet d'environ 80 mm au maximum.

# FIG.1

# FIG.2

FIG.3

FIG.4